# EUROPEAN PATENT APPLICATION

(11) **EP 4 845 138 A1**
(43) Date of publication of application: **25.11.2026**
(21) Application number: 25207652.6
(22) Date of filing: 09.10.2025
(51) Int. Cl.: H04N 1/00, H04N 1/32

(54) **INFORMATION PROCESSING SYSTEM, PROGRAM, AND INFORMATION PROCESSING METHOD**

(30) Priority: 19.05.2025 JP 2025083327
(71) Applicant: FUJIFILM Business Innovation Corp., Minato-ku Tokyo (JP)
(72) Inventor: HOSHINO, Haruhisa, Yokohama-shi, Kanagawa (JP)
(74) Representative: Becker Kurig & Partner Patentanwälte mbB

(57) **Abstract**

An information processing system includes a processor configured to, in a case where a transmission error occurs in a case where read image data is transmitted based on destination information set from an address book, notify of information related to the transmission error via a notification destination of a user associated with the destination information in the address book.

## Description

### BACKGROUND OF THE INVENTION

### (i) Field of the Invention

The present disclosure relates to an information processing system, a program, and an information processing method.

### (ii) Description of Related Art

JP2016-178466A discloses an image processing apparatus including a generation unit that reads an image to generate image data, a reception unit that receives input of setting information consisting of a plurality of items related to transmission processing of the image data, a transmission unit that transmits the image data in accordance with the setting information, and a notification unit that notifies of an item corresponding to an error generated in the transmission processing.

### SUMMARY OF THE INVENTION

There is an image processing apparatus having a function of transmitting image data read by a scan function to a preset destination.

In a case of using the function, in a case where information related to the destination has changed due to a change in a user name, a password, or the like, the image data may fail to be transmitted and a transmission error may occur. In addition, in a case where the transmission error occurs, a user may not be identifiable. In addition, it is difficult for the user to specify a cause of the transmission error.

An object of the present disclosure is to provide an information processing system, a program, and an information processing method that enable a user to recognize occurrence of a transmission error in a case where image data is transmitted to a destination set from an address book.

According to a first aspect of the present disclosure, there is provided an information processing system including a processor configured to: in a case where a transmission error occurs in a case where read image data is transmitted based on destination information set from an address book, notify of information related to the transmission error via a notification destination of a user associated with the destination information in the address book.

According to a second aspect of the present disclosure, in the information processing system according to the first aspect, the information related to the transmission error may include destination information based on which transmission processing has been executed.

According to a third aspect of the present disclosure, in the information processing system according to the second aspect, the destination information may include at least one of a transmission destination folder, a server name, a user name, or a password.

According to a fourth aspect of the present disclosure, in the information processing system according to the second aspect, the processor may be configured to: change, based on information related to a correction content of the destination information included in a reply to the notification, the destination information set in the address book to destination information based on the modification content.

According to a fifth aspect of the present disclosure, in the information processing system according to the fourth aspect, the processor may be configured to: notify of whether or not the destination information set in the address book has been changed via the notification destination.

According to a sixth aspect of the present disclosure, in the information processing system according to the second aspect, the information related to the transmission error may further include an identifier for identifying the user and a random code for preventing fraud.

According to a seventh aspect of the present disclosure, in the information processing system according to the sixth aspect, the processor may be configured to: change the destination information in a case where the identifier and the random code included in a reply to the notification match the identifier and the random code included in the notification.

According to an eighth aspect of the present disclosure, in the information processing system according to the first aspect, the information related to the transmission error may include a URL or an executable file for changing the destination information.

According to a ninth aspect of the present disclosure, in the information processing system according to the eighth aspect, the processor may be configured to: change the destination information based on information input in the URL or the executable file.

According to a tenth aspect of the present disclosure, in the information processing system according to the first aspect, the processor may be configured to: display, on a display unit, whether or not to notify of the information related to the transmission error in a case where the read image data is transmitted based on the destination information set from the address book.

According to an eleventh aspect of the present disclosure, in the information processing system according to the first aspect, the processor may be configured to: display, on a display unit, whether or not to notify the user of the information related to the transmission error in a case where the transmission error occurs, in a manner settable in advance in the address book.

According to a twelfth aspect of the present disclosure, there is provided a program causing a computer to execute: notifying of, in a case where a transmission error occurs in a case where read image data is transmitted based on destination information set from an address book, information related to the transmission error via a notification destination of a user associated with the destination information in the address book.

According to a thirteenth aspect of the present disclosure, there is provided an information processing method including: notifying of, in a case where a transmission error occurs in a case where read image data is transmitted based on destination information set from an address book, information related to the transmission error via a notification destination of a user associated with the destination information in the address book.

With the information processing system according to the first aspect of the present disclosure, it is possible to enable the user to recognize occurrence of the transmission error in a case where the image data is transmitted to a destination set from the address book.

With the information processing system according to the second aspect of the present disclosure, it is possible for the user to specify content of the transmission error.

With the information processing system according to the third aspect of the present disclosure, it is possible for the user to specify content of the transmission error.

With the information processing system according to the fourth aspect of the present disclosure, it is possible for the user to change the destination information of the address book by replying to the notification.

With the information processing system according to the fifth aspect of the present disclosure, it is possible for the user to check whether or not the destination information of the address book has been changed.

With the information processing system according to the sixth aspect of the present disclosure, it is possible to prevent fraudulent change of the destination information of the address book.

With the information processing system according to the seventh aspect of the present disclosure, it is possible to prevent the destination information of the address book from being changed fraudulently.

With the information processing system according to the eighth aspect of the present disclosure, it is possible to prevent leakage of confidential information in the destination information of the address book.

With the information processing system according to the ninth aspect of the present disclosure, it is possible to change the destination information in a terminal device while preventing leakage of confidential information in the destination information.

With the information processing system according to the tenth aspect of the present disclosure, it is possible for the user to select whether or not to notify of the information related to the transmission error in a case of transmitting the image data.

With the information processing system according to the eleventh aspect of the present disclosure, it is possible for the user to select in advance whether or not to notify of the information related to the transmission error in the address book.

With the program according to the twelfth aspect of the present disclosure, it is possible to enable the user to recognize occurrence of the transmission error in a case where the image data is transmitted to a destination set from the address book.

With the information processing method according to the thirteenth aspect of the present disclosure, it is possible to enable the user to recognize occurrence of the transmission error in a case where the image data is transmitted to a destination set from the address book.

### BRIEF DESCRIPTION OF THE DRAWINGS

Exemplary embodiment(s) of the present invention will be described in detail based on the following figures, wherein:
FIG. 1 is a diagram showing a system configuration of an information processing system according to an exemplary embodiment of the present disclosure;
FIG. 2 is a block diagram showing a hardware configuration of an image forming apparatus according to the exemplary embodiment of the present disclosure;
FIG. 3 is a block diagram showing a functional configuration of the image forming apparatus according to the exemplary embodiment of the present disclosure;
FIG. 4 is a diagram showing an example of an address book management table stored in a data storage unit of the image forming apparatus according to the exemplary embodiment of the present disclosure;
FIG. 5 is a diagram showing an example of an operation of the image forming apparatus according to the exemplary embodiment of the present disclosure;
FIG. 6 is a diagram showing an example of an e-mail transmitted from the image forming apparatus to a terminal device according to the exemplary embodiment of the present disclosure;
FIG. 7 is a diagram showing an example of an e-mail transmitted from the image forming apparatus to the terminal device according to the exemplary embodiment of the present disclosure;
FIG. 8 is a diagram showing an example of an e-mail replied from the terminal device to the image forming apparatus;
FIG. 9 is a diagram showing an example of an operation in a case where the image forming apparatus receives an e-mail from the terminal device;
FIG. 10 is a diagram showing an example of an e-mail transmitted from the image forming apparatus to the terminal device;
FIG. 11A is a diagram showing an example of an e-mail transmitted from the image forming apparatus to the terminal device, and FIG. 11B is a diagram showing an example of a destination information editing screen displayed in a case where a URL of FIG. 11A is clicked;
FIG. 12 is a diagram showing an example of an e-mail transmitted from the image forming apparatus to the terminal device;
FIG. 13 is a diagram showing an example of an operation screen displayed in a case where the image forming apparatus executes scanning and transmission; and
FIG. 14 is a diagram showing an example of an address book setting screen in the image forming apparatus.

### DETAILED DESCRIPTION OF THE INVENTION

Hereinafter, an example of an exemplary embodiment of the present disclosure will be described with reference to the drawings. The identical reference numerals are given to the identical or equivalent components and parts in each drawing. Dimensional ratios in the drawings are exaggerated for convenience of description and may be different from actual ratios.

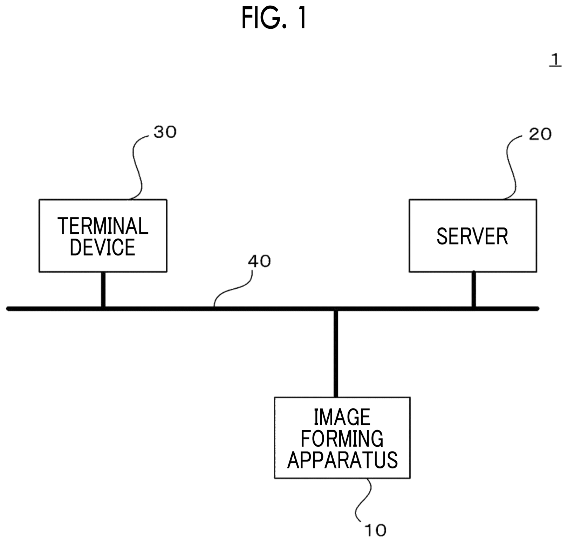

FIG. 1 is a diagram showing an example of a schematic configuration of an information processing system 1 according to the present exemplary embodiment. As shown in FIG. 1, the information processing system 1 according to the present exemplary embodiment includes an image forming apparatus 10, a server 20, and a terminal device 30. The image forming apparatus 10, the server 20, and the terminal device 30 are connected to each other via a network 40. The network 40 may be, for example, a local area network (LAN), a wide area network (WAN), or the Internet.

The image forming apparatus 10 receives image data transmitted from the server 20 or the terminal device 30, and outputs an image corresponding to the image data onto a recording medium such as printing paper. The image forming apparatus 10 is an information processing apparatus called a so-called multifunctional machine that has a plurality of functions such as a printing (print) function, a scan function, a copying (copy) function, a facsimile function, and a post-processing function such as a stapling function or a punching function. In addition, the image forming apparatus 10 transmits image data generated by reading (scanning) a document to the server 20 or the terminal device 30, which is a preset destination, and stores the image data in a preset destination of the server 20 or the terminal device 30 (hereinafter, referred to as scanning and transmission).

The server 20 is an information processing apparatus for storing various data such as the image data scanned and transmitted by the image forming apparatus 10.

The terminal device 30 is an information processing apparatus such as a personal computer (PC) used by a user. The terminal device 30 generates image data such as document data, and transmits the generated image data to the image forming apparatus 10 or the server 20 via the network 40. In addition, the terminal device 30 stores various data such as the image data scanned and transmitted by the image forming apparatus 10.

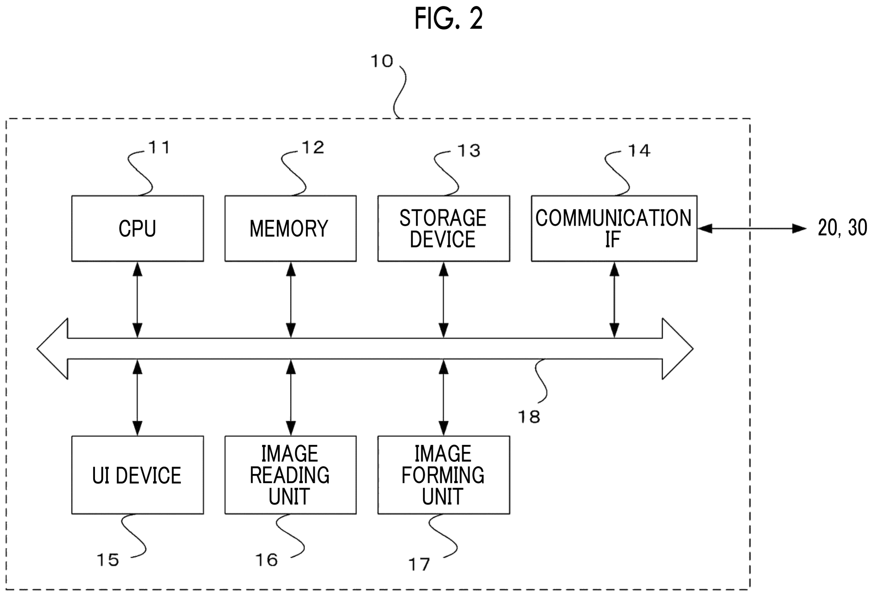

Next, a hardware configuration of the image forming apparatus 10 will be described with reference to FIG. 2.

As shown in FIG. 2, the image forming apparatus 10 includes a central processing unit (CPU) 11, a memory 12 capable of temporarily storing data, a storage device 13 such as a hard disk drive, a communication interface (IF) 14 that transmits and receives data to and from the terminal device 30, the server 20, and the like via the network 40, a user interface (UI) device 15 including a touch panel, a liquid crystal display, and a keyboard, an image reading unit 16, an image forming unit 17, and the like. These components are connected to each other via a control bus 18.

The image forming unit 17 prints an image on the recording medium through processes such as charging, exposing, developing, transferring, and fixing. The image reading unit 16 scans a document set by an automatic document feeder that reads the document, an optical sensor, a scanning mechanism, or the like, and generates image data.

The CPU 11 is a processor that executes predetermined processing based on a control program stored in the memory 12 or the storage device 13 to control the operation of the image forming apparatus 10. In the present exemplary embodiment, a configuration in which the CPU 11 reads the control program stored in the memory 12 or the storage device 13 and executes the control program has been described, but the present disclosure is not limited to this. The control program may be provided in a form of being recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a universal serial bus (USB) memory and a memory card. In addition, the control program may be acquired from an external device via a communication line connected to the communication interface 14. Further, the control program may be provided, for example, as single application software or may be incorporated, as one function of the image forming apparatus 10, in software of each device.

In the present exemplary embodiment, the CPU 11 has been described as reading and executing the control program stored in the memory 12 or the storage device 13, but the program can also be stored in a storage medium such as a CD-ROM and provided to the CPU 11.

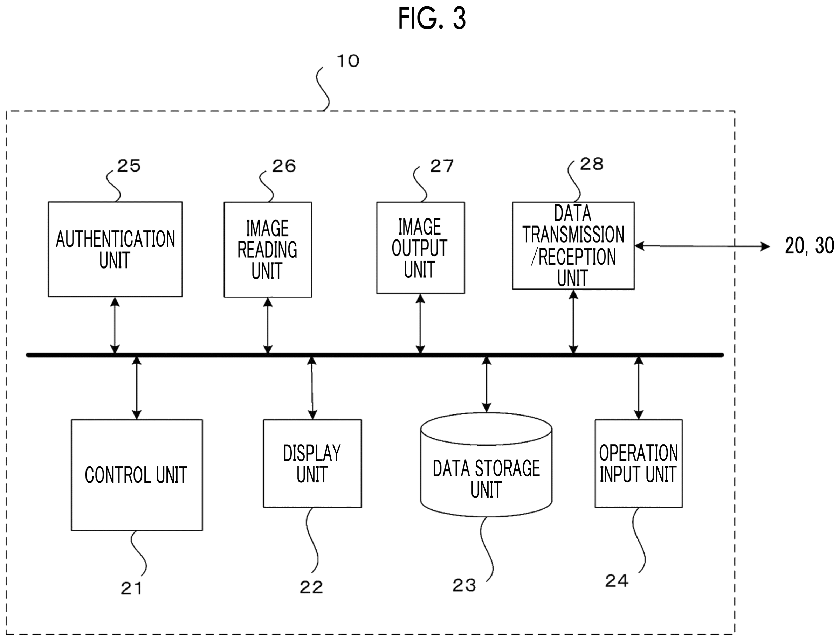

FIG. 3 is a block diagram showing a functional configuration of the image forming apparatus 10 implemented by executing the control program.

As shown in FIG. 3, the image forming apparatus 10 according to the present exemplary embodiment includes a control unit 21, a display unit 22, a data storage unit 23, an operation input unit 24, an authentication unit 25, an image reading unit 26, an image output unit 27, and a data transmission/reception unit 28.

The authentication unit 25 executes an authentication process for a user who wants to use the image forming apparatus 10. The display unit 22 is controlled by the control unit 21 and displays various types of information to the user. The operation input unit 24 inputs information on various operations performed by the user.

The data storage unit 23 is a memory for temporarily storing image data and the like during processing performed by the control unit 21. In addition, the data storage unit 23 stores an address book management table in which information related to the user is managed for each user.

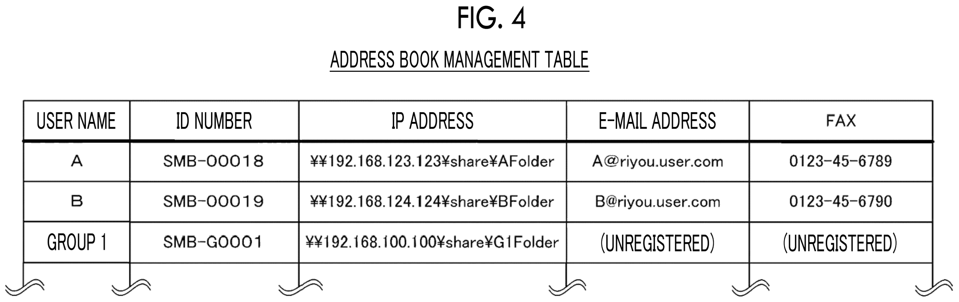

FIG. 4 shows an example of the address book management table stored in the data storage unit 23.

In the data storage unit 23, an address book ID number that is an identifier for identifying a plurality of users who use the image forming apparatus 10, an Internet protocol (IP) address that is information (hereinafter, referred to as destination information) on a destination of the scanning and transmission, and an e-mail address and a facsimile number that serve as notification destinations in a case where a transmission error occurs are stored in association with each other for each user. In addition, the address book is configured such that a plurality of users can be registered as one group. In a case where a destination is set from the address book, an IP address, an e-mail address, a facsimile number, and the like corresponding to an ID number of the destination can be specified.

The image reading unit 26 operates based on an instruction from the control unit 21 to perform a process of scanning a set document to generate image data.

The image output unit 27 operates based on an instruction from the control unit 21 to execute a process of printing and outputting the image data onto the recording medium.

The data transmission/reception unit 28 transmits and receives data to and from an external device such as the server 20 or the terminal device 30. For example, the data transmission/reception unit 28 receives a print job from the server 20 or the terminal device 30, transmits the image data by facsimile, transmits the image data generated by scanning to the server 20 or the terminal device 30, or performs transmission and reception of an e-mail.

The control unit 21 controls the display unit 22, the data storage unit 23, the operation input unit 24, the authentication unit 25, the image reading unit 26, the image output unit 27, the data transmission/reception unit 28, and the like to execute various processes such as a printing process, a copying process, and a scanning process.

The control unit 21 executes scanning and transmission in which the image data generated by scanning with the image reading unit 26 is transmitted to an IP address corresponding to a destination set from the address book.

In a case where a transmission error occurs in a case where the scanning and transmission is performed to the destination set from the address book, the control unit 21 notifies of information related to the transmission error (hereinafter, also referred to as error notification) via the e-mail address or the facsimile number that is the notification destination of the user associated with the address book ID number and the IP address.

The information related to the transmission error includes destination information based on which transmission processing has been executed, and includes, for example, at least one of an IP address, a transmission destination folder, a server name, a user name, or a password.

In addition, in a case where a reply to the error notification is received from the terminal device 30 via the data transmission/reception unit 28, the control unit 21 changes, based on information related to the correction content of the destination information included in the reply to the error notification, the destination information set in the address book of the address book management table to destination information based on the correction content. Then, the control unit 21 transmits a notification of whether or not the destination information set in the address book has been changed, to the notification destination of the user who replies to the error notification including the correction content of the destination information.

In addition, the control unit 21 displays, on the display unit 22, whether or not to notify of the information related to the transmission error in a case where the scanning and transmission is performed to the destination set from the address book, in a selectable manner. In addition, the control unit 21 displays, on the display unit 22, whether or not to notify the user of the information related to the transmission error in a case where the transmission error occurs, in a manner settable in advance in the address book.

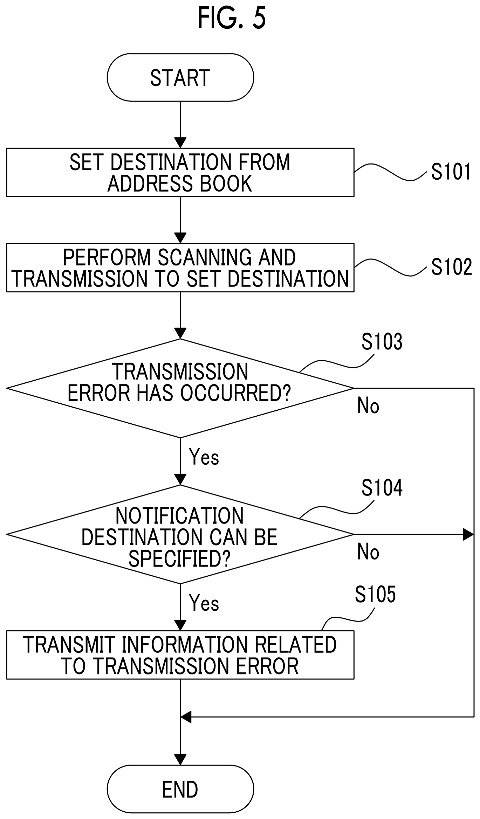

Next, an operation of the image forming apparatus 10 according to the present exemplary embodiment will be described with reference to FIG. 5.

In the following description, a case will be described in which a user A sets a destination from the address book of the image forming apparatus 10 and scans and transmits image data generated by scanning a document in the image forming apparatus 10 into a user A's folder in a shared folder of the server 20.

First, in step S101, in response to an operation of the user A, the control unit 21 sets, from the address book, a destination (storage destination) of the image data generated by scanning the document.

In step S102, in response to an operation of the user A, the control unit 21 performs the scanning and transmission to the set destination via the data transmission/reception unit 28. Specifically, for example, the scanning and transmission is performed to an IP address "¥¥192.168.123.123¥share¥AFolder" of an address book ID number "SMB-00018" of the user A.

Next, in step S103, the control unit 21 determines whether or not a transmission error has occurred. In a case where the transmission error has occurred, the process proceeds to the next step S104, and, in a case where the transmission error has not occurred, the scanned and transmitted image data is stored in an IP address "¥¥192.168.123.123¥share¥AFolder" of the server 20.

Next, in step S104, the control unit 21 determines whether or not a notification destination of the transmission error can be specified. In a case where the notification destination of the transmission error can be specified, the process proceeds to the next step S105, and, in a case where the notification destination of the transmission error cannot be specified, the process ends. Specifically, in a case where no notification destination such as the e-mail address or the facsimile number is set for the user ID number or IP address in which the transmission error has occurred in the address book management table, the process ends without transmitting the information related to the transmission error. Even in a case where no notification destination is set in the address book management table, in a case where the notification destination of the transmission error can be specified through authentication of the authentication unit 25, the information related to the transmission error can be notified of via the corresponding notification destination.

Next, in step S105, the control unit 21 transmits the information related to the transmission error to the specified notification destination. Specifically, the control unit 21 notifies of the information related to the transmission error via an e-mail address "A@riyou.user.com" or a facsimile number "0123-45-6789" corresponding to the IP address "¥¥192.168.123.123¥share¥AFolder" of the user A in which the transmission error has occurred.

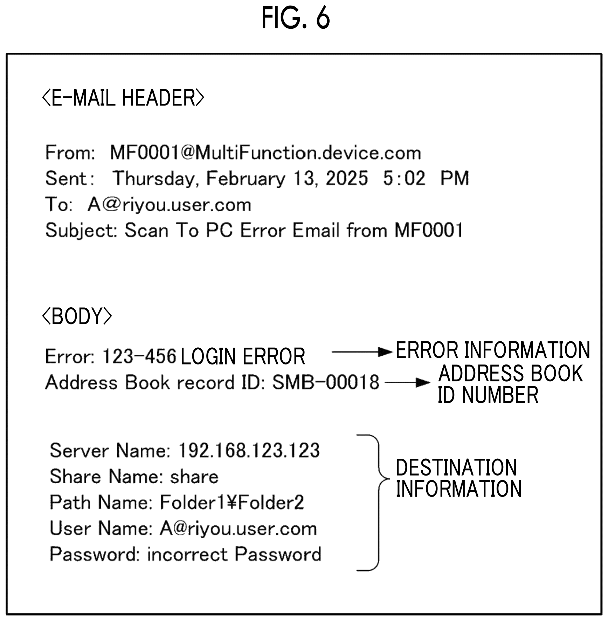

FIG. 6 shows an example of an e-mail transmitted from the image forming apparatus 10 to the terminal device 30 in a case where the transmission error has occurred.

The e-mail header contains a sender's e-mail address, a transmission date and time, a recipient's (destination) e-mail address, a subject, and the like. In addition, the body of the e-mail includes the information related to the transmission error. The information related to the transmission error includes error information including an error number and the content of the error, an address book ID number based on which the transmission processing has been executed, and destination information based on which the transmission processing has been executed. The destination information includes at least one of an IP address, a transmission destination folder, a server name, a user name, or a password.

That is, even in a case where the user executes the scanning and transmission in the image forming apparatus 10 without the authentication using the authentication unit 25, the user can check, by e-mail, the content of the error of the scanning and transmission in which the transmission error has occurred, the destination information, and the like on the terminal device 30, and can recognize what is wrong.

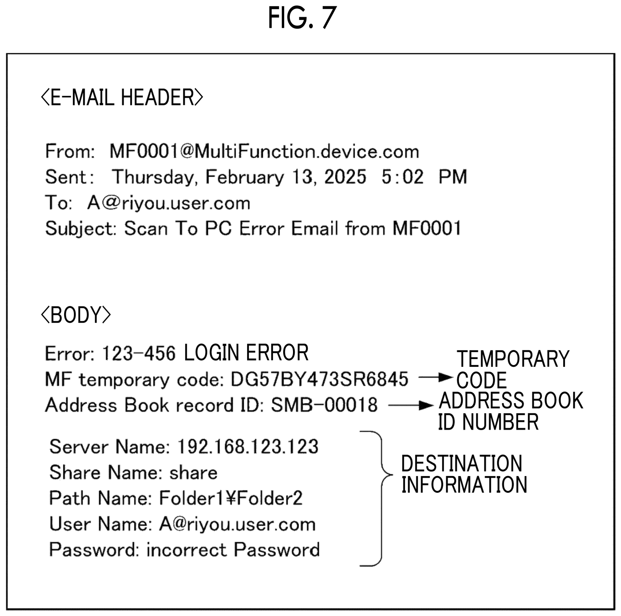

FIG. 7 is a diagram showing a modification example of an e-mail transmitted from the image forming apparatus 10 to the terminal device 30 in a case where the transmission error has occurred.

In the present modification example, the body of the e-mail transmitted from the image forming apparatus 10 to the terminal device 30 includes a random code that is a temporary code used temporarily to prevent fraud.

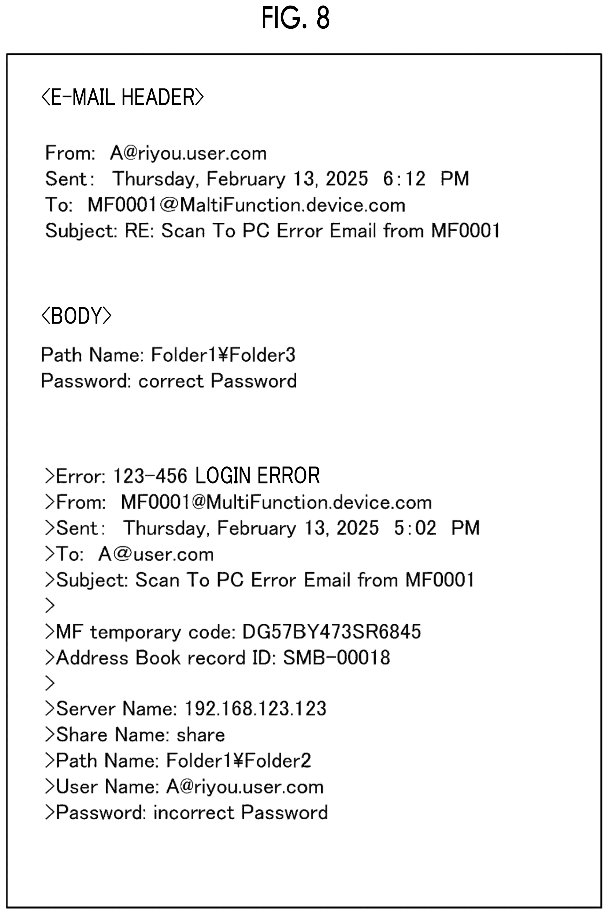

Then, the user may change the destination information of the address book by replying to the e-mail. That is, the control unit 21 specifies the destination information of the user to be changed by the address book ID number included in a reply to an error notification e-mail as shown in FIG. 8, and changes (also referred to as update) the destination information of the user in a case where the temporary code included in the reply to the error notification e-mail matches the temporary code included in the error notification e-mail. As a result, the destination information of the address book in the address book management table is prevented from being changed by the fraudulent e-mail.

Specifically, the user replies to the error notification e-mail from the image forming apparatus 10 as shown in FIG. 7 by correcting the incorrect destination information, for example, the path name and the password, in the e-mail body as shown in FIG. 8. As a result, the user's corresponding destination information set in the address book management table can be changed.

Next, an example of an operation of the image forming apparatus 10 in a case where a reply e-mail is received from the terminal device 30 will be described with reference to FIGS. 8 to 10.

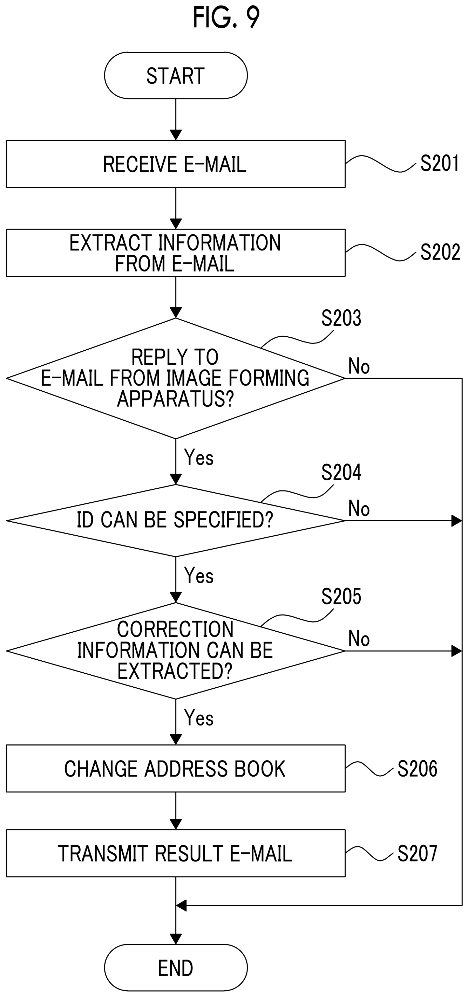

First, in step S201 shown in FIG. 9, the control unit 21 receives an e-mail from the terminal device 30.

Next, in step S202, the control unit 21 extracts information from the subject or the body of the received e-mail. Specifically, for example, the control unit 21 extracts a subject "RE: Scan To PC Error Email from MF0001" from the e-mail header of the e-mail as shown in FIG. 8 and a subject "Scan To PC Error Email from MF0001" from the body of the e-mail.

Next, in step S203, the control unit 21 determines from the e-mail header or the body whether or not the received e-mail is a reply to an e-mail from the image forming apparatus 10. In a case where the received e-mail is a reply to the e-mail from the image forming apparatus 10, the process proceeds to the next step S204, and, in a case where the received e-mail is not a reply to the e-mail from the image forming apparatus 10, the process ends. Specifically, for example, the control unit 21 determines whether or not the received e-mail is a reply to the e-mail from the image forming apparatus 10 from the subject "RE: Scan To PC Error Email from MF0001" of the e-mail header and the subject "Scan To PC Error Email from MF0001" of the body which are extracted from the received e-mail.

Next, in step S204, the control unit 21 determines whether or not the address book ID number based on which the scanning and transmission has been executed can be specified from the received e-mail. In a case where the ID number can be specified, the process proceeds to the next step S205, and, in a case where the ID number cannot be specified, the process ends. Specifically, for example, the control unit 21 specifies the address book ID number "SMB-00018" in which the transmission error has occurred, from the body of the e-mail as shown in FIG. 8.

Next, in step S205, the control unit 21 determines whether or not correction information can be extracted from the body of the received e-mail. In a case where the correction information can be extracted, the process proceeds to the next step S206, and, in a case where the correction information cannot be extracted, the process ends. Specifically, for example, the control unit 21 extracts a path name "Folder1¥Folder3" and a password "correct Password" from the body of the e-mail as shown in FIG. 8.

Next, in step S206, the control unit 21 changes the destination information of the corresponding ID number in the address book based on the extracted correction information. Specifically, for example, the control unit 21 changes the path name "Folder1¥Folder2" of the address book ID number "SMB-00018" to "Folder1¥Folder3" and changes the password "incorrect Password" to "correct Password".

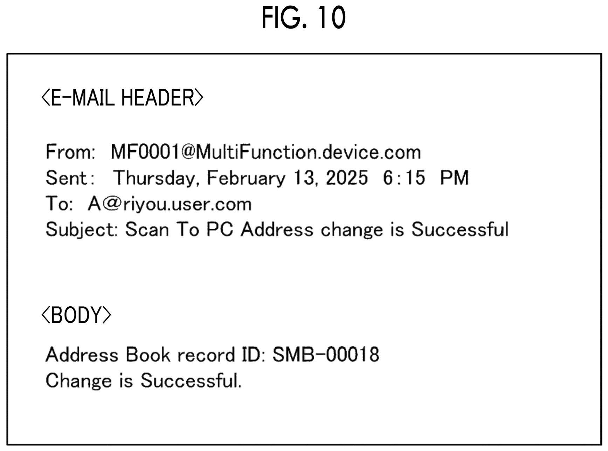

Next, in step S207, the control unit 21 transmits a result e-mail indicating whether or not the change of the destination information of the address book has been successful, to the terminal device 30. Specifically, for example, an e-mail indicating that the change of the address book ID number "SMB-00018" has been successful as shown in FIG. 10 is transmitted to the terminal device 30.

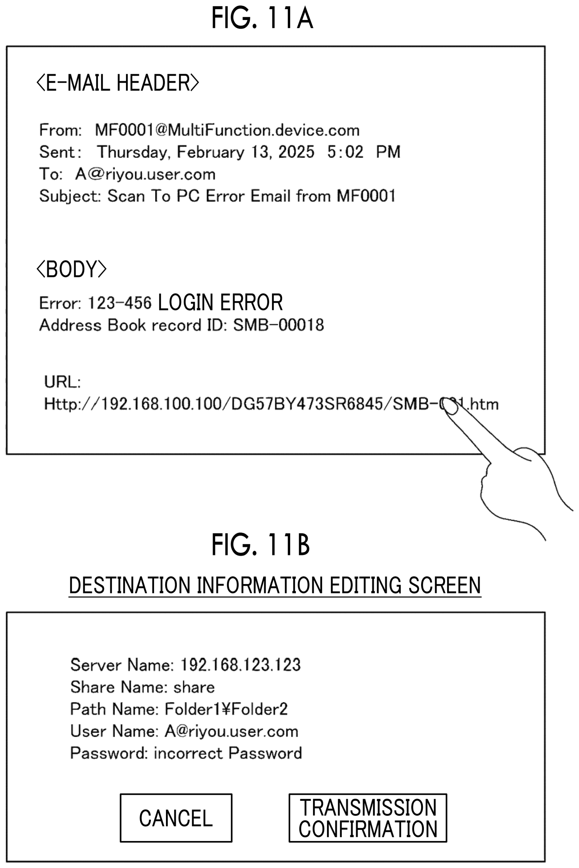

FIG. 11A shows a modification example of an e-mail transmitted from the image forming apparatus 10 to the terminal device 30 in a case where the transmission error has occurred. FIG. 11B is a diagram showing an example of a Web screen displayed in a case where a URL is clicked in FIG. 11A.

In the present modification example, as shown in FIG. 11A, the body of the e-mail transmitted to the terminal device 30 includes error information including an error number and the content of the error, an address book ID number based on which the transmission processing has been executed, and a URL for operating the image forming apparatus 10, as information related to the transmission error.

In a case where the URL included in the body of the e-mail is clicked, a Web screen for operating the image forming apparatus 10 is displayed as shown in FIG. 11B, for example. The destination information related to the transmission error is displayed on the Web screen in an editable manner. In addition, the Web screen displays a transmission confirmation button for executing the scanning and transmission based on the edited destination information. That is, the user can change the destination information of the address book in the terminal device 30 and can check whether the image forming apparatus 10 can be connected to the server 20 or can perform the scanning and transmission. As described above, by not including the destination information in the body of the e-mail, it is possible to prevent confidential information from leaking.

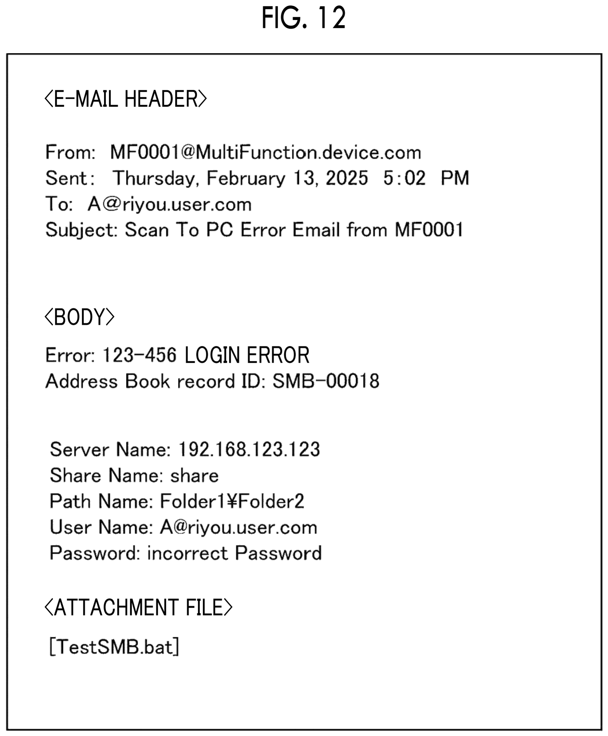

FIG. 12 shows a modification example of an e-mail transmitted from the image forming apparatus 10 to the terminal device 30 in a case where the transmission error has occurred.

In the present modification example, as shown in FIG. 12, the body of the e-mail transmitted to the terminal device 30 includes error information including an error number and the content of the error, an address book ID number based on which the transmission processing has been executed, and destination information based on which the transmission processing has been executed, as information related to the transmission error, and an executable file for executing the scanning and transmission in the image forming apparatus 10 is attached.

The user can check whether the image forming apparatus 10 can be connected to the server 20 or can perform the scanning and transmission in the terminal device 30 by changing the destination information related to the transmission error in the executable file and double-clicking the executable file. As a result, it is possible to prevent the confidential information from leaking.

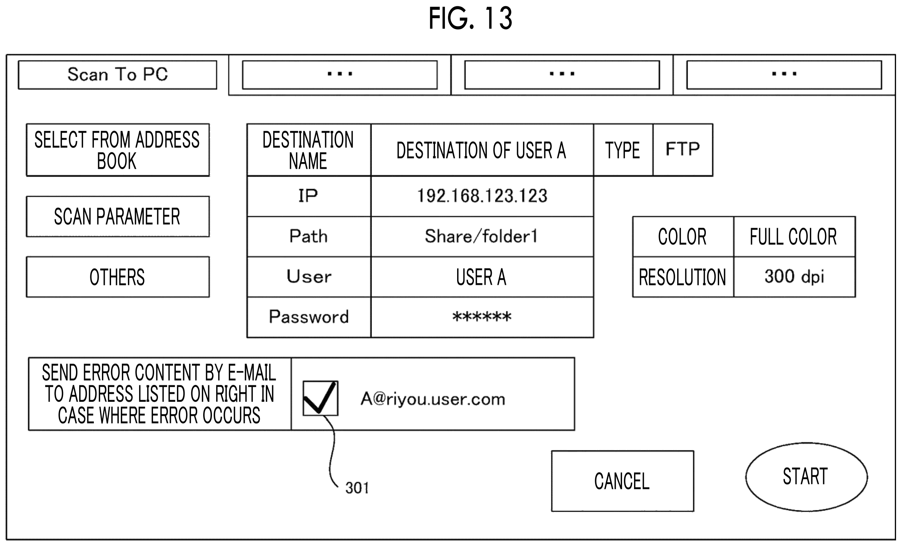

FIG. 13 is a diagram showing an example of an operation screen in a case where the scanning and transmission of the image forming apparatus 10 is executed. As shown in FIG. 13, on an execution screen of the scanning and transmission of the image forming apparatus 10, the user can select whether or not to notify the user of the error content in a case where the transmission error occurs. That is, by checking a check box 301, setting of sending the error content to the user by e-mail can be made. In addition, by not checking the check box 301, setting of not e-mailing the error content to the user can be made.

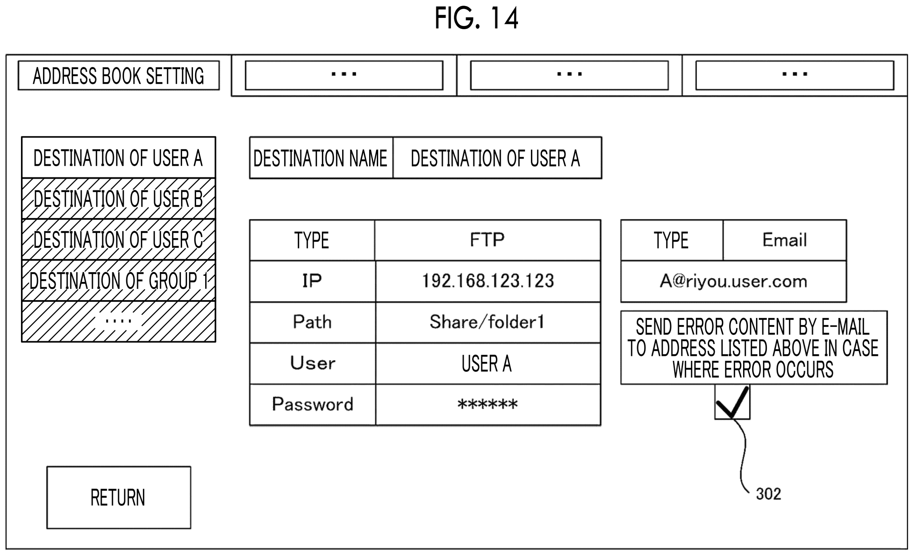

FIG. 14 is a diagram showing an example of an address book setting screen of the image forming apparatus 10. As shown in Fig. 14, on the setting screen of the address book of the image forming apparatus 10, the user can select whether or not to notify the user of the error content in a case where the transmission error occurs. That is, by checking a check box 302, setting of sending the error content to the user by e-mail can be made. In addition, by not checking the check box 302, setting of not e-mailing the error content to the user can be made.

In the above-described exemplary embodiment, a case has been described in which the user stores and uses the address book management table in the image forming apparatus 10. The present disclosure is not limited to this, and the present disclosure can be similarly applied to a case where the address book management table is stored and used in the server 20 or a case where a lightweight directory access protocol (LDAP) server that is a remote address book is used.

In addition, in the above-described exemplary embodiment, a case where the destination of the scanning and transmission of the image forming apparatus 10 is the server 20 has been described. The present disclosure is not limited to this, and the present disclosure can be similarly applied to a case where the image data is transmitted to the terminal device 30 of the user. Such configurations use protocols such as a server message block (SMB), a file transfer protocol (FTP), and a secure shell file transfer protocol (SFTP). Specifically, without being limited to the above, the present disclosure can be similarly applied to a destination in a format in which parameters necessary for network transmission, which are configured of a server name, a folder name, a login user name, and a login password, are set as the destination of the address book.

In addition, in the above-described exemplary embodiment, a case where the destination is set by using the address book and the scanning and transmission is performed has been described. The present disclosure is not limited to this, and the present disclosure can be similarly applied to a case where the transmission error is transmitted to the notification destination authenticated and specified by the authentication unit 25.

Although the exemplary embodiment of the present disclosure has been described above, the exemplary embodiment of the present disclosure is not limited to the exemplary embodiment, and various modifications and implementations can be made within the scope of the spirit of the present disclosure.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the technology of the present disclosure can also be applied to a program and a program product.

### [Supplementary Note]

Hereinafter, a supplementary note of the aspects of the present disclosure will be described.
(((1))) An information processing system comprising:
   a processor configured to:
   in a case where a transmission error occurs in a case where read image data is transmitted based on destination information set from an address book, notify of information related to the transmission error via a notification destination of a user associated with the destination information in the address book.
(((2))) The information processing system according to (((1))),
   wherein the information related to the transmission error includes destination information based on which transmission processing has been executed.
(3) The information processing system according to (((2))),
   wherein the destination information includes at least one of a transmission destination folder, a server name, a user name, or a password.
(((4))) The information processing system according to (((2))), wherein the processor is configured to:
   change, based on information related to a correction content of the destination information included in a reply to the notification, the destination information set in the address book to destination information based on the correction content.
(((5))) The information processing system according to (((4))), wherein the processor is configured to:
   notify of whether or not the destination information set in the address book has been changed via the notification destination.
(((6))) The information processing system according to (((2))),
   wherein the information related to the transmission error further includes an identifier for identifying the user and a random code for preventing fraud.
(((7))) The information processing system according to (((6))), wherein the processor is configured to:
   change the destination information in a case where the identifier and the random code included in a reply to the notification match the identifier and the random code included in the notification.
(((8))) The information processing system according to (((1))),
   wherein the information related to the transmission error includes a URL or an executable file for changing the destination information.
(((9))) The information processing system according to (((8))), wherein the processor is configured to:
   change the destination information based on information input in the URL or the executable file.
(((10))) The information processing system according to (((1))), wherein the processor is configured to:
   display, on a display unit, whether or not to notify of the information related to the transmission error in a case where the read image data is transmitted based on the destination information set from the address book.
(((11))) The information processing system according to (((1))), wherein the processor is configured to:
   display, on a display unit, whether or not to notify the user of the information related to the transmission error in a case where the transmission error occurs, in a manner settable in advance in the address book.
(((12))) A program causing a computer to execute:
   notifying of, in a case where a transmission error occurs in a case where read image data is transmitted based on destination information set from an address book, information related to the transmission error via a notification destination of a user associated with the destination information in the address book.

The effects of the configuration of the supplementary notes will be described below.

With the information processing system according to (((1))), it is possible to enable the user to recognize occurrence of the transmission error in a case where the image data is transmitted to a destination set from the address book.

With the information processing system according to (((2))), it is possible for the user to specify content of the transmission error.

With the information processing system according to (((3))), it is possible for the user to specify content of the transmission error.

With the information processing system according to (((4))), it is possible for the user to change the destination information of the address book by replying to the notification.

With the information processing system according to (((5))), it is possible for the user to check whether or not the destination information of the address book has been changed.

With the information processing system according to (((6))), it is possible to prevent the destination information of the address book from being changed fraudulently.

With the information processing system according to (((7))), it is possible to prevent the destination information of the address book from being changed fraudulently.

With the information processing system according to (((8))), it is possible to prevent leakage of confidential information in the destination information of the address book.

With the information processing system according to (((9))), it is possible to change the destination information in a terminal device while preventing leakage of confidential information in the destination information.

With the information processing system according to (((10))), it is possible for the user to select whether or not to notify of the information related to the transmission error in a case of transmitting the image data.

With the information processing system according to (((11))), it is possible for the user to select in advance whether or not to notify of the information related to the transmission error in the address book.

With the program according to (((12))), it is possible to enable the user to recognize occurrence of the transmission error in a case where the image data is transmitted to a destination set from the address book.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: image forming apparatus
- 20:: server
- 21:: control unit
- 22:: display unit
- 23:: data storage unit
- 24:: operation input unit
- 25:: authentication unit
- 26:: image reading unit
- 27:: image output unit
- 28:: data transmission/reception unit
- 30:: terminal device
- 40:: network

## Claims

1. An information processing system comprising:
a processor configured to:
in a case where a transmission error occurs in a case where read image data is transmitted based on destination information set from an address book, notify of information related to the transmission error via a notification destination of a user associated with the destination information in the address book.

2. The information processing system according to claim 1,
wherein the information related to the transmission error includes destination information based on which transmission processing has been executed.

3. The information processing system according to claim 2,
wherein the destination information includes at least one of a transmission destination folder, a server name, a user name, or a password.

4. The information processing system according to claim 2, wherein the processor is configured to:
change, based on information related to a correction content of the destination information included in a reply to the notification, the destination information set in the address book to destination information based on the correction content.

5. The information processing system according to claim 4, wherein the processor is configured to:
notify of whether or not the destination information set in the address book has been changed via the notification destination.

6. The information processing system according to claim 2,
wherein the information related to the transmission error further includes an identifier for identifying the user and a random code for preventing fraud.

7. The information processing system according to claim 6, wherein the processor is configured to:
change the destination information in a case where the identifier and the random code included in a reply to the notification match the identifier and the random code included in the notification.

8. The information processing system according to claim 1,
wherein the information related to the transmission error includes a URL or an executable file for changing the destination information.

9. The information processing system according to claim 8, wherein the processor is configured to:
change the destination information based on information input in the URL or the executable file.

10. The information processing system according to claim 1, wherein the processor is configured to:
display, on a display unit, whether or not to notify of the information related to the transmission error in a case where the read image data is transmitted based on the destination information set from the address book.

11. The information processing system according to claim 1, wherein the processor is configured to:
display, on a display unit, whether or not to notify the user of the information related to the transmission error in a case where the transmission error occurs, in a manner settable in advance in the address book.

12. A program causing a computer to execute:
notifying of, in a case where a transmission error occurs in a case where read image data is transmitted based on destination information set from an address book, information related to the transmission error via a notification destination of a user associated with the destination information in the address book.

13. An information processing method comprising:
notifying of, in a case where a transmission error occurs in a case where read image data is transmitted based on destination information set from an address book, information related to the transmission error via a notification destination of a user associated with the destination information in the address book.
